# EUROPÄISCHE PATENTSCHRIFT

(11) **EP 3 430 283 B1**
(45) Veröffentlichungstag und Bekanntmachung des Hinweises auf die Patenterteilung: **12.06.2024**
(21) Anmeldenummer: 17711173.9
(22) Anmeldetag: 16.03.2017
(51) Int. Cl.: F16F 15/173

(54) **KURBELWELLENANORDNUNG MIT DREHSCHWINGUNGSDÄMPFER**
CRANKSHAFT ASSEMBLY COMPRISING A TORSIONAL VIBRATION DAMPER
SYSTÈME BIELLE-MANIVELLE AVEC AMORTISSEUR DE VIBRATIONS TORSIONNELLES

(30) Priorität: 17.03.2016 DE 102016104953
(43) Veröffentlichungstag der Anmeldung: 23.01.2019
(73) Patentinhaber: Hasse & Wrede GmbH, 12681 Berlin (DE)
(72) Erfinder: STEIDL, Michael, 10318 Berlin (DE); KNOPF, Florian, 14199 Berlin (DE)
(74) Vertreter: Specht, Peter
(86) Internationale Anmeldenummer: PCT/EP2017/056315
(87) Internationale Veröffentlichungsnummer: WO 2017/158131

(56) Entgegenhaltungen:
- WO-A1-2005/038293
- DE-A1- 2 553 544
- DE-A1-102011 007 118
- DE-A1-102014 111 953
- JP-A- 2007 315 416
- US-A- 5 050 446

## Beschreibung

Die Erfindung betrifft eine Kurbelwellenanordnung mit einem Drehschwingungsdämpfer nach dem Oberbegriff des Anspruchs 1.

Eine solche Anordnung nach dem Oberbegriff des Anspruchs 1ist aus der gattungsgemäßen US 5 050 544 A1 bekannt.

Hubkolbenmaschinen in Form von Verbrennungsmotoren setzen die antreibende lineare Bewegung der Kolben mittels Kurbelwellen in Drehbewegungen um und erzeugen damit einen nutzbaren Antrieb. Um einen Gleichlauf der Maschine zu erreichen, wird die Kurbelwelle mit einem Schwungrad versehen, das die maschinenbedingte Drehungleichförmigkeit reduziert. Schwungräder werden üblicherweise an den Kurbelwellen abtriebsseitig verbaut, um die Drehungleichförmigkeit des Motors nicht in den Antriebsstrang zu übertragen.

Gerade bei Mehrzylindermotoren führt das Schwungrad mit seinem Gleichlauf auch dazu, dass die erste elastische Torsionseigenschwingungsform der Kurbelwellen bzw. Kurbelwellenanordnung in der Nähe des Schwungrads einen Schwingungsknoten hat. Durch die abtriebsseitige Positionierung des Schwungrades auf der Kurbelwelle wird so erreicht, dass höherfrequente Schwingungsanteile nicht oder nur geringfügig in den Abtriebsstrang gelangen.

Durch die Regelmäßigkeit der Torsionsschwingungsanregungen kann es unter bestimmten Bedingungen zu Resonanzüberhöhungen kommen, die zu einem Versagen von Bauteilen führen können. Um derartige Resonanzüberhöhungen innerhalb des Motors zu verringern, werden Drehschwingungsdämpfer eingesetzt.

Im Rahmen dieser Schrift seien folgende Begriffsdefinitionen verwendet:
Drehungleichförmigkeit (Starrkörperbewegung) vs. elastische Mode.

Die Drehungleichförmigkeit einer Welle bezeichnet die Drehzahlschwankung der gesamten Welle, die Welle kann dabei als starrer Körper betrachtet werden. Die zugehörige Eigenfrequenz ist f₀ = 0 Hz. Da die Welle hierbei in sich nicht tordiert, treten auch keine Spannungen in der Welle auf, d.h. die Drehungleichförmigkeit führt nicht zu Festigkeitsproblemen in der Welle. Hohe Drehungleichförmigkeiten führen dazu, dass z.B. ein über die Kurbelwelle gesteuerte Ventiltrieb nicht mehr ausreichend genau funktioniert.

Bei einer elastischen Mode (Eigenschwingungsform) verdrillt sich die Welle, die Eigenfrequenzen und Resonanzen sind größer null. Schwingungen in einer elastischen Mode verursachen Spannungen in der Welle und können damit festigkeitsrelevant sein.

Umgangssprachlich wird jede Art der Schwingungsreduktion häufig als Dämpfung bezeichnet. Diese Schrift (siehe z. B. DIN1311: Schwingungen und schwingungsfähige Systeme, VDI 3833: Schwingungsdämpfer und Schwingungstilger, VDI 2039: Drehschwingungen im Antriebsstrang) unterscheidet detaillierter die folgenden Prinzipien:
Dämpfung:
   Dämpfung ist das Umwandeln von Bewegungsenergie (kinetische Energie) in Energieformen, die für das betrachtete schwingungsfähige System unwirksam sind. Die Dämpfer leisten dabei eine Umwandlung von kinetischer Energie in Wärme aufgrund innerer oder äußerer Reibungsvorgänge. Dämpfung ist also Energiedissipation. Dämpfung bewirkt eine Reduktion der Resonanzen eines Systems und reduziert nicht die Drehungleichförmigkeit eines drehschwingungsfähigen Systems.
Beispiele: Viskositätsdrehschwingungsdämpfer, Reibungsdämpfer
Tilgung:
   Das Prinzip der Schwingungstilgung basiert auf einer Massenkraftkompensation - die Tilgermasse schwingt gegenphasig zur erregenden Kraft. Durch einen an einem schwingungsfähigen System zusätzlich angebrachten Tilger erhöht sich die Anzahl der Systemfreiheitsgrade um mindestens eins.

Die Tilgerabstimmung kann je nach Anforderung auf unterschiedliche Art erfolgen:
1. Eine feste Erregerfrequenz wird durch Abstimmung auf diese Frequenz getilgt. Die Dämpfung des Tilgers sollte möglichst gering sein, was außerhalb des Tilgungsbereiches eine große Resonanzüberhöhung zur Folge hat.
2. Ein fester Erregerfrequenzbereich wird durch Abstimmung auf die Mittenfrequenz getilgt. Die Dämpfung ist je nach Frequenzbereichsbreite zu optimieren.
3. Eine Resonanzfrequenz wird durch eine Abstimmung auf die zugehörige Eigenfrequenz getilgt.

Die genaue Abstimmfrequenz und die Wahl der Dämpfung sind anwendungsspezifisch. Normalerweise erfolgt die Abstimmung so, dass die Überhöhungen im Amplitudenfrequenzgang bei der unteren und oberen Tilgerresonanzfrequenz gleich sind. Durch eine weichere/härtere Tilgerabstimmung vergrößert/verkleinert sich die Überhöhung der oberen Tilgerresonanz bei gleichzeitiger Verringerung/Vergrößerung der unteren Tilgerresonanzüberhöhung.

### Beispiele: Gummitilger, Stahlfedertilger

Eine Besonderheit stellt der Drehzahladaptive Tilger (DAT) dar.

Bei Drehzahladaptiven Tilgern (DAT) ändert sich die Tilgerfrequenz proportional zur Drehzahl. Der DAT wird verwendet, um Erregerordnungen, also sich proportional mit der Drehzahl verändernde Erregerfrequenzen, zu tilgen. Da sich seine Abstimmfrequenz und damit auch seine Tilgungsfrequenz mit der Drehzahl verändern, ist der DAT nicht sinnvoll auf (feste) Systemeigenfrequenzen abzustimmen. Das Konzept des Drehzahladaptiven Tilgers ermöglicht es, die störenden Drehschwingungen einer Ordnung im gesamten Antriebsstrang direkt am Ursprung, d. h. etwa an der Kurbelwelle eines Verbrennungsmotors, weitgehend zu eliminieren. In der Praxis ausgeführte DAT sind fast immer Fliehkraftpendel und werden verwandt um die Drehungleichförmigkeiten zu reduzieren indem sie die erste Motorhauptordnung betilgen.

### Schwingungsisolierung:

Die Schwingungsisolierung wird umgangssprachlich auch als Entkopplung bezeichnet. Das elektrische Analogon ist ein Tiefpassfilter. Bei der Schwingungsisolierung wird durch eine weiche, elastische Verbindung zweier Teilsysteme das eine System vom anderen isoliert. Bei der Schwingungsisolierung gibt es eine Grenzfrequenz; Schwingungen mit Frequenzen oberhalb der Grenzfrequenz werden verringert wohingegen Schwingungen mit Frequenzen unterhalb der Grenzfrequenz verstärkt werden.

### Beispiele: Entkoppelte Riemenscheibe, Zwei Massen Schwungrad (ZMS), elastische oder hydraulische Kupplungen

Schwingungsreduzierung kann zusätzlich noch durch eine geeignete Verstimmung des schwingungsfähigen Systems erfolgen oder durch ein Veränderung der Schwingungserregung, etwa durch die Veränderung der Zündreihenfolge beim Verbrennungsmotor.

Dämpfung, Tilgung und Isolierung erfolgen meistens mit passiven Bauelementen. Eine aktive Schwingungsreduzierung mit aktiven Bauelementen (Aktoren mit Hilfsenergie) ist auch möglich, in der Praxis jedoch sehr selten. Bei semiaktiven Bauelementen werden die Eigenschaften von passiven Bauelementen geeignet verändert. Z. B. können Dämpfungselemente zum Durchfahren von Resonanzen zugeschaltet werden.

Mit zunehmender Leistung der Motoren, insbesondere bei Dieselmotoren entstand ein Bedarf an leistungsfähigeren Schwingungsdämpfern. Hier haben sich Viskositäts-Drehschwingungsdämpfer etabliert. Einige Ausführungsformen sind beispielsweise in der DE 195 07 519 A1, der DE 20 2004 021 437 U1 und der DE 10 2012 107 554 A1 beschrieben.

Da ein Drehschwingungsämpfer in oder in der Nähe eines Schwingungsknotens keine oder nur eine geringe Wirksamkeit hat, wird dieser an dem dem Schwungrad gegenüberliegenden Ende der Kurbelwelle angebracht. Derzeit ist die Kurbelwellenanordnung eines Motors also immer folgendermaßen aufgebaut: Drehschwingungsdämpfer - Kurbelwelle - Schwungrad - Kupplung-Abtrieb, d.h. über die Seite des Motors mit Schwungrad und Kupplung wird der hauptsächliche Teil der Motorleistung abgegriffen In vielen Fällen, im Besonderen im Bereich größerer Motoren, ist der Dämpfer hierbei ein Viskositäts-Drehschwingungsdämpfer und die Kupplung ist eine Elastomerkupplung.

Zwar wird diese Kurbelwellenanordnung in der Patentliteratur nicht direkt beschrieben, aber diverse beschriebene Lösungen geben Kombinationen mit der Riemenscheibe (US 2 594 555, EP 0 503 424 B1) oder mit der Nockenwellenverzahnung (DE 196 21 460 C1) an. Hier liegen die Riemenscheibe wie auch der Nockenwellenantrieb der Abtriebsseite gegenüber.

Zum Stand der Technik sei ferner die DE 100 05 544 A1 genannt, nach welcher vorgeschlagen wird, mit einem Schwungrad einer Kurbelwellenanordnung im radial äußeren Bereich einen Auslenkungsmassenträger einer Einrichtung zu verbinden, die als Schwingungstilger ausgelegt ist. Geschaffen wird derart ein drehzahladaptiver Tilger (DAT) mit den eingangs beschriebenen Besonderheiten. Verringert werden nicht Resonanzen der Kurbelwelle, sondern ausschließlich Drehungleichförmigkeiten im Antriebsstrang.

### Aus dem Stand der Technik ist ferner Folgendes bekannt:

Die WO2005038293A1 offenbart einen Drehschwingungsdämpfer zur Dämpfung von Drehschwingungen eines Verbrennungsmotors mit einer zum Befestigen des Drehschwingungsdämpfers an einer Welle des Verbrennungsmotors ausgestalteten Primärmasse. Die Primärmasse ist mit einem Gehäuse verbunden, wobei in dem Gehäuse eine ringförmige, sich um die Drehachse des Drehschwingungsdämpfers herum erstreckende Schwungmasse angeordnet ist. Zwischen einer Innenwand des Gehäuses und der Schwungmasse ist ein mit einer viskosen Flüssigkeit gefüllter Spalt ausgebildet. Das Gehäuse, in dem die Schwungmasse angeordnet ist, weist eine mit einem Verschlussteil des Gehäuses geschlossene Öffnung auf, wobei eine zwischen dem Verschlussteil und einem Rand der geschlossenen Öffnung verlaufende Grenzfläche sich in einem Grenzbereich der Oberfläche des Gehäuses erstreckt. Der Grenzbereich ist mit einem elastomeren Material flüssigkeitsdicht gegen ein Austreten der viskosen Flüssigkeit aus dem Gehäuse abgedichtet.

Die DE 10 2014 111 953 A1 offenbart eine Kurbelwellenanordnung, bestehend aus einer Kurbelwelle, einem Drehschwingungsdämpfer und einem Abtrieb, wobei die Kurbelwellenanordnung für einen Verbrennungsmotor ausgelegt ist und wobei der Drehschwingungsdämpfer aus einer Primärmasse und einer Sekundärmasse besteht, wobei die Primärmasse fest mit einer Kurbelwelle verbunden ist und die Sekundärmasse als seismische Masse mit einer viskosen Flüssigkeit an die Primärmasse gekoppelt ist. Der Drehschwingungsdämpfer ist dazu ausgelegt, neben der Funktion der Reduzierung der Drehschwingungen der Kurbelwelle auch eine Schwungradfunktion zur Reduzierung der Drehungleichförmigkeit zu übernehmen.

Ähnliches offenbaren auch die DE 25 53 544 A1 und die US 5 050 446 A.

Die JP 2007 315416 A zeigt einen Stand der Technik mit den Merkmalen a) bis f) des Anspruchs 1.

Die DE102011007118 offenbart eine Drehschwingungsdämpfungsanordnung, für den Antriebsstrang eines Fahrzeugs, umfasst einen zur Drehung um eine Drehachse A anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen sind. Im ersten Drehmomentübertragungsweg ist eine erste Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen.

Ein Nachteil der benannten und auch der gattungsgemäßen Anordnungen besteht darin, dass die Hubkolbenmaschine bzw. der Verbrennungsmotor mit mehreren Funktionselementen - Viskositäts-Schwingungsdämpfer am freien Ende der Kurbelwelle, Schwungrad und anschließend am Schwungrad montierte Kupplung an der Abtriebsseite der Kurbelwelle - ausgestattet werden muss. Dabei dient der Drehschwingungsdämpfer der Vermeidung von Resonanzüberhöhungen/der Reduktion der Spannungen in der Kurbelwelle, das Schwungrad der Vermeidung von hohen Drehungleichförmigkeiten und die Kupplung einer Isolation eines weiteren Antriebsstrangs von den noch verbleibenden Schwingungen der Hubkolbenmaschine. Dieser bekannte Aufbau beinhaltet alle wesentlichen Elemente, die für den Betrieb eines Antriebsstrangs mit Verbrennungsmotor - hier auch Hubkolbenmotor genannt - notwendig sind: Der Drehschwingungsdämpfer am Frontend der Kurbelwelle reduziert die durch die Anregung der elastischen Moden entstehenden Spannungen in der Kurbelwelle auf ein ungefährliches Maß, das Schwungrad sorgt für eine ausreichend kleine Drehungleichförmigkeit (Starrkörperbewegung der Kurbelwelle) und die Kupplung isoliert den weiteren Antriebsstrang von den trotz Dämpfer und Schwungrad vorhandenen Restschwingungen der Verbrennungskraftmaschine. Diese mehreren voneinander unabhängigen Funktionselemente erhöhen das Gewicht der Maschine wie auch die Kosten hierfür. Des Weiteren nehmen die mehreren Funktionselemente einen gewissen Raum ein, der den kompakten Aufbau einer Hubkolbenmaschine begrenzt.

Der Erfindung liegt gegenüber dem gattungsgemäßen Stand der Technik die Aufgabe zugrunde, eine verbesserte Kurbelwellenanordnung zu schaffen.

Die Aufgabe wird durch eine Kurbelwellenanordnung mit den Merkmalen des Anspruchs 1 gelöst.

Nach dem Kennzeichen des Anspruchs 1 ist der Drehschwingungsdämpfer dazu ausgelegt ist, neben der Funktion der Reduzierung der Resonanz-Drehschwingungen der Kurbelwelle auch eine Schwungradfunktion zur Reduzierung der Drehungleichförmigkeit zu übernehmen, so dass in den Drehschwingungsdämpfer die Funktion Schwungrad integriert ist, wobei der Drehschwingungsdämpfer eine Schwungmassenträgheit bildet, die in eine kleine Primärmassenträgheit und eine relativ dazu größere Sekundärmassenträgheit derart aufgeteilt ist, dass bei niedrigen Drehzahlen, also niedrigen Frequenzen, der Verbund aus Primär- und Sekundärmassen-trägheit sich quasi wie ein starrer Körper verhält, wodurch seine gesamte Massenträgheit wirksam ist und die Drehungleichförmigkeit des Motors wie bei einem Schwungrad reduziert wird und so dass sich bei hohen Drehzahlen und hohen Frequenzen, der Verbund aus Primär- und Sekundärmassenträgheit wie ein Dämpfer verhält.

Damit wurde eine kombinierte Lösung gefunden, die alle wesentlichen für den Betrieb des Antriebsstrangs notwendigen Elemente (Dämpfung, Reduzierung der Drehungleichförmigkeit, Isolation) beinhaltet, diese jedoch nicht in Form mehrerer Bauteile bereitstellt, sondern in Form eines einzigen integrierten Bauteils. Im Vergleich zur bisherigen Anordnung der Bauteile sowohl am freien Ende der Kurbelwelle wie auch an der Abtriebsseite befindet sich das neue integrierte Bauteil ausschließlich an der Abtriesseite der Kurbelwelle.

Es ist vorteilhaft, wenn der Kupplungs-Funktionsabschnitt direkt in ein Gehäuse des Drehschwingungsdämpfers integriert ist.

Es ist nach einer Variante optional konstruktiv vorteilhaft und einfach , wenn der Kupplungs-Funktionsabschnitt einen radial inneren Ring aufweist, auf dessen Außenumfang ein Elastomer-Kupplungsring an seinem Innenumfang festgelegt ist, wobei der innere Ring mit der Primärmassenträgheit gekoppelt ist und wenn der Außenumfang des Elastomer-Kupplungsringes an einem äußeren Ring festgelegt, der ein Teil eines Eingangselementes eines Getriebes ist. Hierdurch wird eine besonders kompakte Bauweise ermöglicht, weiterhin wird ein besonders kleines rotatorisches Massenträgheitsmoment des Antriebsstrangs erreicht. Damit können die Eigenfrequenzen, im Besonderen die für die Festigkeit relevanten Eigenfrequenzen, erhöht werden, sodass keine Anregung der Eigenfrequenzen im relevanten Drehzahlbereich erfolgt und somit die Spannungen in der Kurbelwelle verringert werden.

Es kann weiter vorteilhaft vorgesehen sein und führt sogar zur Integration einer vierten Funktion, wenn die ringförmige Primärmassenträgheit an ihrem Außenumfang mit einer vorzugsweise umlaufenden Verzahnung versehen ist, insbesondere, um einen Starterkranz auszubilden.

Es ist auch vorteilhaft, dass sich bei niedrigen Drehzahlen, also niedrigen Frequenzen, der Verbund aus Primär- und Sekundärmassenträgheit quasi wie ein starrer Körper verhält, wodurch seine gesamte Massenträgheit wirksam ist und die Drehungleichförmigkeit des Motors wie bei einem Schwungrad reduziert wird und so dass sich bei hohen Drehzahlen und hohen Frequenzen, der Verbund aus Primär- und Sekundärmassenträgheit wie ein Dämpfer verhält.

Das Verhältnis zwischen der Sekundärmassenträgheit und der Primärmassenträgheit ist zumindest größer als ½. Bevorzugt ist es, wenn dieses Verhältnis 1/1 oder sogar größer als 1/1 ist. Im letzteren Fall ist es wiederum besonders bevorzugt und vorteilhaft, wenn das Verhältnis zwischen der Sekundärmassenträgheit und der Primärmassenträgheit 2/1 beträgt oder größer als 2/1 ist.

Beispielsweise dann, wenn der Bauraum eines Standard-SAE-Schwungrades zu nutzen ist, ist es aufgrund des begrenzten Bauraumes und ggf. vorzusehender Bohrungen schwierig, ein großes Verhältnis zwischen der Sekundärmassenträgheit und der Primärmassenträgheit zu realisieren.

Der Drehschwingungsdämpfer der Kurbelwellenanordnung weist eine kleine Primärmassenträgheit und eine relativ dazu größere Sekundärmassenträgheit auf, wobei die Primärmassenträgheit fest mit einer Kurbelwelle verbunden ist und die Sekundärmassenträgheit als seismische Masse elastisch dämpfend an die Primärmassenträgheit gekoppelt ist. Dabei übernimmt der Drehschwingungsdämpfer neben der Funktion der Reduzierung der Drehschwingungen der Kurbelwelle auch eine Funktion eines Schwungrades zur Reduzierung der Drehungleichförmigkeit. Er ersetzt so in einfacher Weise das Schwungrad. Vorzugsweise ist daher an der Kurbelwellenanordnung kein weiteres Schwungrad vorgesehen. Da das Schwungrad durch einen Drehschwingungsdämpfer ersetzt wird, kann damit ohne ein zusätzliches Dämpfungselement ein ähnliches dynamisches Verhalten der Kurbelwellenanordnung wie in der derzeitig üblichen Anordnung erreicht werden. Dadurch bedingt entfällt ein Bauteil, was sowohl Gewicht wie auch Herstellungskosten einspart. Durch den Wegfall des üblichen Dämpfers am vorderen Kurbelwellenende sowie die Integration der Primärseite der Kupplung in dieses Bauteil kann ein so ausgestatteter Hubkolbenmotor auch kompakter aufgebaut werden.

Wird ein Dämpfer an einem klassischen großen Schwungrad angebracht, so hat er, wie bereits oben beschrieben, auf Grund der Nähe zum Schwingungsknoten keine Wirksamkeit. Erfindungsgemäß wird jedoch das Schwungrad als Drehschwingungsdämpfer aufgebaut. Die Schwungmasse wird in eine kleine Primär- und eine relativ dazu große Sekundärmassenträgheit aufgeteilt, wobei die Primärmassenträgheit fest an der Kurbelwelle angebracht und die Sekundärmassenträgheit als seismische Masse elastisch dämpfend mit der Primärmassenträgheit verbunden ist. Das Gewicht des Drehschwingungsdämpfers erhöht sich gegenüber den herkömmlichen Drehschwingungsdämpfern. Das zusätzliche Gewicht verteilt sich im Vergleich zur Primärmassenträgheit überproportional auf die Sekundärmassenträgheit. Bei einem solchen Aufbau ergibt sich bei entsprechender Abstimmung der elastisch dämpfenden Elemente folgendes Verhalten: Bei niedrigen Drehzahlen, also niedrigen Frequenzen, verhält sich der Verbund aus Primär- und Sekundärmassenträgheit wie ein starrer Körper, wodurch seine gesamte Massenträgheit wirksam ist, und die Drehungleichförmigkeit des Motors wird wie bei einem Schwungrad reduziert. Da gleichzeitig das üblicherweise schwere Schwungrad komplett entfällt, ist das Gesamtgewicht in Summe niedriger als bei konventionellem Aufbau des Antriebsstrangs.

Bei hohen Drehzahlen und hohen Frequenzen, wenn die Drehungleichförmigkeit eine geringe Rolle spielt, verhält sich der Verbund aus Primär- und Sekundärmassenträgheit wie ein Dämpfer mit einer sehr hohen Sekundärmassenträgheit. In dieser Situation werden die Drehschwingungen der elastischen Torsionsmoden bevorzugt reduziert.

Mit diesem Aufbau kann der Drehschwingungsdämpfer auf der ursprünglichen Position des Schwungrades montiert werden und dabei beide Funktionalitäten ausüben, ergänzt um die Funktionalität einer Kupplung zum Getriebe der Verbrennungsmaschine.

Derart wird eine Kurbelwellenanordnung erstellt, die aus einer Kurbelwelle, einem Drehschwingungsdämpfer der oben beschriebenen Art mit integrierter Kupplung und integrierter Schwungradfunktion und einem Abtrieb besteht, ohne dass die Kurbelwellenanordnung ein weiteres Schwungrad enthält.

Bevorzugt ist das fluide Schermittel ein Silikonöl.

Eine Anwendung der erfindungsgemäßen Kurbelwellenanordnung betrifft eine Vorrichtung zur Dämpfung von Drehschwingungen einer Kurbelwelle eines Verbrennungsmotors. Die Vorrichtung umfasst einen Drehschwingungsdämpfer und eine elastische Kupplung. Der Drehschwingungsdämpfer weist einen kleinen Primärmassenkörper auf, der fest mit einem abtriebsseitigen Ende der Kurbelwelle verbunden ist. Der Drehschwingungsdämpfer umfasst darüber hinaus einen relativ zur Primärmassenkörper größeren Sekundärmassenkörper, der mittels einer viskosen Flüssigkeit mit dem Primärmassenkörper gekoppelt ist. Der Sekundärmassenkörper ist relativ zu dem Primärmassenkörper verlagerbar. Vorteilhafterweise kann beispielsweise vorgesehen sein, dass der Sekundärmassenkörper von einem Ringkörper gebildet ist, der in Umfangsrichtung um den Primärmassenkörper herum angeordnet ist.

Es ist des Weiteren eine elastische Kupplung vorgesehen, die mit dem Primärmassenkörper verbunden ist.

Hierdurch kann eine Vorrichtung geschaffen werden, die in einer gegenüber dem Stand der Technik verbesserten Weise eine Dämpfung von Drehschwingungen einer Kurbelwelle ermöglicht.

Der Begriff Primärmassenkörper entspricht dem zuvor verwendeten Begriff Primärmassenträgheit und der Begriff Sekundärmassenkörper entspricht dem zuvor verwendeten Begriff Sekundärmassenträgheit.

Eine elastische Kupplung ist hier ein im Kraftleitungsweg zwischen Kurbelwelle und Generator oder Getriebe angeordnetes Element, welches eine Übertragung von Drehmomenten von der Kupplungseingangsseite zur Kupplungsausgangsseite zulässt, aber zwischen Kupplungseingangsseite und Kupplungsausgangseite unter Erzeugung elastischer Rückstellkräfte geringe Verdrehwinkel, sogenannten Drehwinkelversatz, zulässt.

Eine elastische Kupplung kann ein oder mehrere Elemente aus gummielastischem Material, z. B. aus Gummi, umfassen, oder alternativ auch andere Federelemente, z. B. metallische Elemente, wie beispielsweise Drehfedern.

Vorteilhaft ist die Eingangsseite der elastischen Kupplung unmittelbar mit dem Primärmassenkörper verbunden.

Gemäß einer vorteilhaften Ausgestaltung der Erfindung ist die Kupplung dem Primärmassenkörper nachgeschaltet. Diese Formulierung bezieht sich auf den Kraftleitungsweg von der Kurbelwelle hin zu dem Generator oder Getriebe.

Gemäß einer weiteren vorteilhaften Ausgestaltung umfasst die elastische Kupplung wenigstens ein Element aus gummielastischem Material. Diese Ausgestaltung ermöglicht einen Rückgriff auf Bestandteile herkömmlicher Kupplungen.

Gemäß einer weiteren vorteilhaften Ausgestaltung bildet der Drehschwingungsdämpfer mit der Kupplung eine Baueinheit oder Handhabungseinheit. Dies ermöglicht die Erzielung einer kompakten Bauweise und die Integration unterschiedlicher Funktionen in eine einzige Baueinheit.

Gemäß einer weiteren vorteilhaften Ausgestaltung ist die Kupplung an dem Drehschwingungsdämpfer lösbar befestigbar, insbesondere axial befestigbar. Diese Ausführungsform der Erfindung ermöglicht eine besonders einfache Montage und ggf. zu Wartungs- und Reparaturzwecken eine einfache Demontage. So kann beispielsweise vorgesehen sein, dass die in der elastischen Kupplung vorhandenen elastischen Elemente, z. B. gummielastischen Elemente, nach Erreichung vorherbestimmter Wartungsintervalle oder im Reparaturfalle auf einfache Weise getauscht werden können.

Gemäß einer weiteren vorteilhaften Ausgestaltung ist der Sekundärmassenkörper von einem Ring gebildet, der den Primärmassenkörper umgibt. Diese Ausführungsform ermöglicht gleichermaßen einen Rückgriff auf herkömmliche Drehschwingungsdämpfer.

Gemäß einer weiteren Ausgestaltung ist die Kupplung von einer im Wesentlichen ringförmigen Anordnung bereitgestellt. Dies ermöglicht eine derartige Ausbildung der erfindungsgemäßen Vorrichtung, dass mit ihr auch hohe Drehmomente übertragen werden können.

Gemäß einer weiteren vorteilhaften Ausgestaltung der Erfindung ist die Anordnung radial innerhalb des Primärmassenkörpers positioniert. Diese Ausgestaltung ermöglicht eine besonders kompakte, nämlich axial kurzbauende Bauweise.

Gemäß einer alternativen Ausgestaltung ist die Anordnung axial neben dem Primärmassenkörper positioniert. Dies ermöglicht eine Verwendung einer Kupplung mit ringförmiger Anordnung mit einem großen Durchmesser, mit der große Drehmomente übertragen werden können.

Im Folgenden soll die Erfindung anhand von Ausführungsbeispielen unter Bezug auf die Figuren näher erläutert werden.
- Figur 1: zeigt eine Kurbelwellenanordnung nach dem bekannten Stand der Technik;
- Figur 2: zeigt eine weitere Kurbelwellenanordnung;
- Figur 3: einen Abschnitt einer erfindungsgemäßen Kurbelwellenanordnung bzw. einer Vorrichtung, die nicht Teil der Erfindung ist, zur Dämpfung von Drehschwingungen,
- Figur 4: einen Abschnitt einer weiteren erfindungsgemäßen Kurbelwellenanordnung bzw. einer Vorrichtung, die nicht Teil der Erfindung ist, zur Dämpfung von Drehschwingungen,
- Figur 5: einen Abschnitt einer weiteren erfindungsgemäßen Kurbelwellenanordnung bzw. einer Vorrichtung, die nicht Teil der Erfindung ist, zur Dämpfung von Drehschwingungen,
- Figur 6: ein weiteres Ausführungsbeispiel einer erfindungsgemäßen Kurbelwellenanordnung bzw. einer Vorrichtung, die nicht Teil der Erfindung ist, und
- Figur 7: die Vorrichtung der Figur 6 in einer perspektivischen, schematischen Ansicht in Einzeldarstellung etwa entlang Ansichtspfeil VII in Figur 6.

Ausführungsbeispiele sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

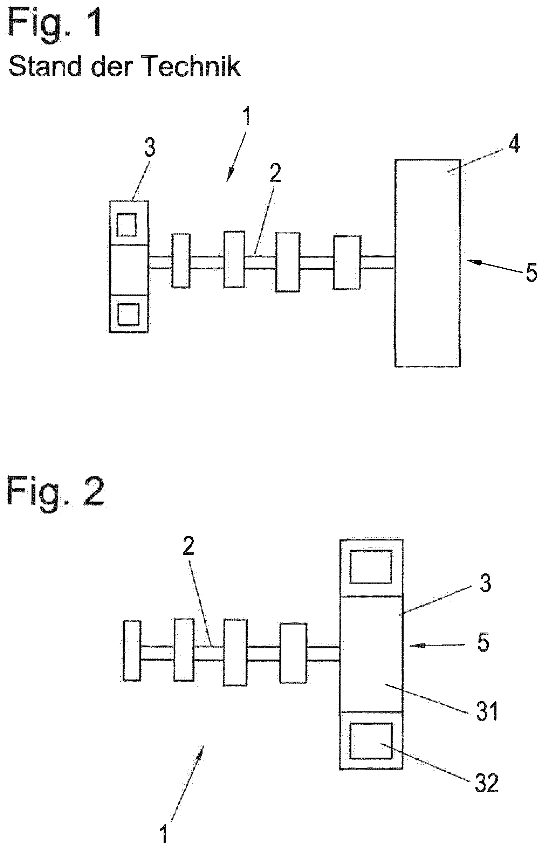

Einen bekannten Stand der Technik zeigt die Figur 1. Die Kurbelwellenanordnung 1 zeigt eine Kurbelwelle 2, bei der auf der Abtriebsseite 5 ein Schwungrad 4 angeordnet ist. Dieses Schwungrad 4 dient der Verringerung der Drehungleichförmigkeit und sorgt für einen Gleichlauf der Kurbelwellenanordnung. Das Schwungrad 4 bewirkt einen Schwingungsknoten der Kurbelwellenanordnung 1 in der Nähe des Schwungrades 4. Deshalb ist es nicht sinnvoll, den Drehschwingungsdämpfer 3 an das Schwungrad 4 zu koppeln, da die Wirkung in dieser Position gering wäre. Aus diesem Grunde ist ein Drehschwingungsdämpfer 3, der dazu dient die Drehschwingungen der Kurbelwellenanordnung 1 zu verringern, am gegenüberliegenden Ende der Kurbelwelle 2 angebracht. Rechts des Schwungrades 4 schließt sich ein Abtrieb an, z.B. ein Getriebe oder ein Generator oder dgl. (nicht dargestellt).

Die Figur 2 zeigt eine andere Kurbelwellenanordnung 1 als Zwischenschritt, auf dem die Erfindung aufbaut. Diese Kurbelwellenanordnung 1 ist besonders für einen Hubkolbenmotor, insbesondere für einen Verbrennungsmotor geeignet. Das Schwungrad 4 ist durch einen Drehschwingungsdämpfer 3 ersetzt worden. Dieser ist an dem Abtriebsende 5 der Kurbelwelle 2 befestigt. Der Drehschwingungsdämpfer 3 befindet sich also auf der ursprünglichen Position des Schwungrades. Da der Schwingungsdämpfer 3 auch die Aufgabe der Reduzierung der Drehungleichförmigkeit übernimmt, benötigt er eine geeignete Abstimmung zwischen der Primärmassenträgheit 31, die fest mit der Kurbelwelle verbunden ist, und der Sekundärmassenträgheit 32, die seismisch, elastisch dämpfend an der Primärmassenträgheit 31 angebracht ist. Die geeignete Abstimmung bewirkt, dass bei geringer Drehzahl, also bei geringen Frequenzen, die Verbindung zwischen Primärmassenträgheit 31 und Sekundärmassenträgheit 32 als starr betrachtet werden kann. Beide Massen 31, 32 bilden quasi eine Einheit und fungieren bei niedrigen Drehzahlen als Schwungrad. In dieser Situation spielen Drehschwingungen bei einem Motor eine untergeordnete Rolle. Ein weiteres Schwungrad 4 ist bei einer solchen Kurbelwellenanordnung 1 nicht notwendig.

Bei höherer Drehzahl, also bei höheren Frequenzen kommt die größere Sekundärmassenträgheit 32 zur Geltung und dämpft die Drehschwingungen. Der Drehschwingungsdämpfer 3 arbeitet in seiner ursprünglichen Form. In diesem Betriebszustand, also bei hohen Drehzahlen, spielt die Drehungleichförmigkeit eine untergeordnete Rolle.

Die in dem Beispiel gezeigte Kurbelwellenanordnung 1 zeigt eine Prinzipzeichnung für einen Vier-Zylinder-Motor. Die Erfindung soll nicht darauf beschränkt sein, sie lässt sich auch einsetzen als Kurbelwellenanordnung von Motoren mit geringerer oder höherer Zylinderanzahl, insbesondere mit sechs, acht, zehn oder zwölf Zylindern.

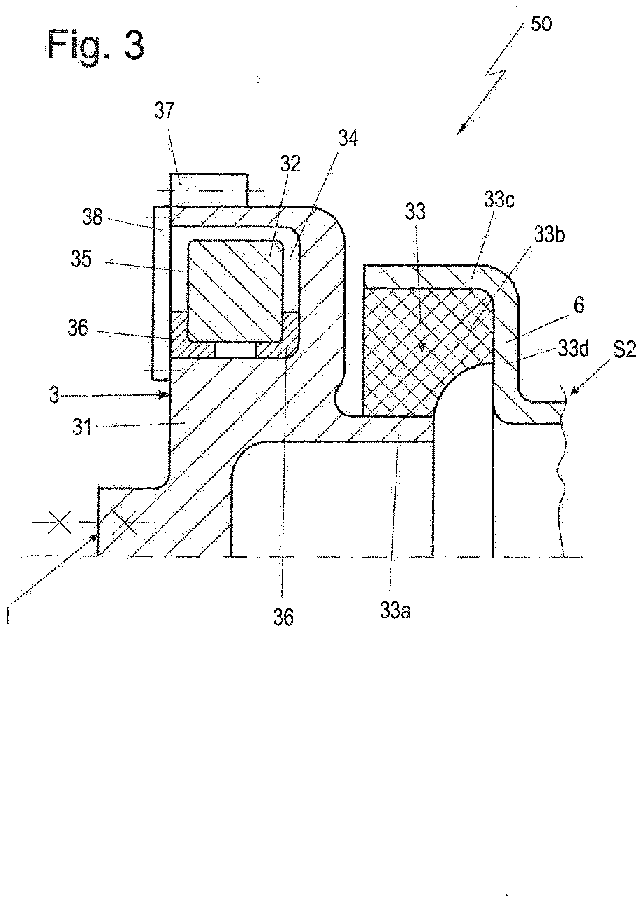

Fig. 3 zeigt einen Abschnitt 50 einer erfindungsmäßen Ausgestaltung einer Kurbelwellenanordnung 1. Der Abschnitt 50 wird im Rahmen dieser Patentanmeldung synonym auch als Vorrichtung 50 zur Dämpfung von Drehschwingungen einer Kurbelwelle bezeichnet. Auch diese Kurbelwellenanordnung 1 ist besonders für einen Hubkolbenmotor, insbesondere für einen Verbrennungsmotor geeignet.

Das Schwungrad 4 ist wiederum durch einen Drehschwingungsdämpfer 3 ersetzt worden, das auch Schwungradfunktionen übernimmt.

Daher ist wiederum ein bzw. der Drehschwingungsdämpfer 3 an dem Abtriebsende 5 der Kurbelwelle 2 befestigt (und zwar an einer Schnittstelle bzw. Drehmomentkoppelstelle S1). Der Drehschwingungsdämpfer 3 befindet sich also auf der ursprünglichen Position eines bzw. des Schwungrades.

Der Drehschwingungsdämpfer weist eine bzw. die ringförmige Primärmassenträgheit 31 auf, die fest mit der Kurbelwelle verbunden ist, und die Sekundärmassenträgheit 32, die hier als Ring ausgebildet ist, der in einer Kammer 34 der Primärmassenträgheit angeordnet ist, wobei ein Spalt 35 zwischen diesen beiden Massen mit viskosem Medium, insbesondere Silikonöl, gefüllt ist. Die Sekundärmassenträgheit 32 ist mit einem oder mehreren Lagerringen 36, die in den Spalt 35 eingesetzt sind, in der Kammer so gelagert, dass er Relativ-Winkelbewegungen bzw. Drehbewegungen relativ zur Primärmassenträgheit 31 ausführen kann.

Die ebenfalls ringförmige Primärmassenträgheit 31 kann an ihrem Außenumfang nach einer optionalen Weiterbildung mit einer vorzugsweise umlaufenden Verzahnung 37 versehen sein. Derart wird vorteilhaft einfach eine Anordnung gebildet, die an einem Verbrennungsmotor (der hier nicht dargestellt ist) als Starterkranz nutzbar ist bzw. einen solchen bildet.

Die Kammer 34 kann zu einer Seite hin mit einem ringförmigen Deckel 38 verschlossen sein. Es ist optional möglich (hier nicht dargestellt) Lüfterflügel an der Primärmassenträgheit 31 anzuordnen.

Eine geeignete Abstimmung bewirkt auch hier, dass bei geringer Drehzahl, also bei geringen Frequenzen, die Verbindung zwischen Primärmassenträgheit 31 und Sekundärmassenträgheit 32 als starr betrachtet werden kann. Beide Massen - die Primärmassenträgheit und die Sekundärmassenträgheit - 31, 32 bilden quasi eine Einheit und fungieren bei niedrigen Drehzahlen als Schwungrad.

In dieser Situation spielen Drehschwingungen bei einem Motor eine untergeordnete Rolle. Ein weiteres Schwungrad 4 ist auch bei dieser Kurbelwellenanordnung 1 nicht notwendig. Bei höherer Drehzahl, also bei höheren Frequenzen kommt die größere Sekundärmassenträgheit 32 zur Geltung und dämpft die Drehschwingungen. Der Drehschwingungsdämpfer 3 arbeitet in seiner ursprünglichen Form. In diesem Betriebszustand, also bei hohen Drehzahlen, spielt die Drehungleichförmigkeit eine untergeordnete Rolle.

Weiterhin ist nach Fig. 3 in den Drehschwingungsdämpfer 3 auch noch direkt ein Kupplungs-Funktionsabschnitt 33 integriert. Der Kupplungs-Funktionsabschnitt 33 ist direkt mit einem Eingangselement 6 eines ansonsten nicht dargestellten Getriebes oder Abtriebs (Schnittstelle bzw. Drehmomentkoppelstelle S2) gekoppelt. Vorteilhaft ist die Integration von drei Funktionen: Kupplung, Schwungrad und Drehschwingungsdämpfer in die Bauteilanordnung Drehschwingungsdämpfer.

Nach Fig. 3 und 4 sowie 5 ist der Kupplungs-Funktionsabschnitt 33 jeweils als Elastomer-Kupplung aufgebaut. Diese weist vorzugsweise entweder einen radialen oder axialen Aufbau auf. Sie weist dann weiter vorzugsweise jeweils einen ersten Ring 33a auf, an dem ein Elastomer-Kupplungsring 33b festgelegt ist, wobei der erste Ring 33a mit der Primärmassenträgheit 31 gekoppelt ist und wobei der Elastomer-Kupplungsring 33b ferner an einem zweiten Ring 33c festgelegt ist, der ein Teil eines Abtriebes bzw. eines Eingangselementes 6 eines Getriebes 6 oder eines Generators oder dgl. ist. Der zweite Ring 33c bildet damit eine Elastomerverbindung, z.B. ausgeführt als Ring, insbesondere als formschlüssige Hülse (steckbarer Ring), aus.

Nach Fig. 3 weist der Kupplungs-Funktionsabschnitt 33 als ersten Ring einen inneren Ring 33a auf, auf dessen Außenumfang der Elastomer-Kupplungsring 33b an seinem Innenumfang festgelegt ist. Der innere Ring 33a ist mit der Primärmassenträgheit 31 gekoppelt (beispielsweise einstückig mit dieser ausgebildet oder mit dieser verschraubt). Der Außenumfang des Elastomer-Kupplungsringes 33b ist an einem äußeren Ring 33c als der zweite Ring festgelegt, der ein Teil des Eingangselementes 6 des Getriebes ist. Der innere Ring 33a und/oder der äußere Ring 33c können als Hülsenabschnitte ausgebildet sein. Der innere Ring 33a liegt innen zum Elastomer-Kupplungsring 33b, der wiederum radial innen zum äußeren Ring 33c liegt.

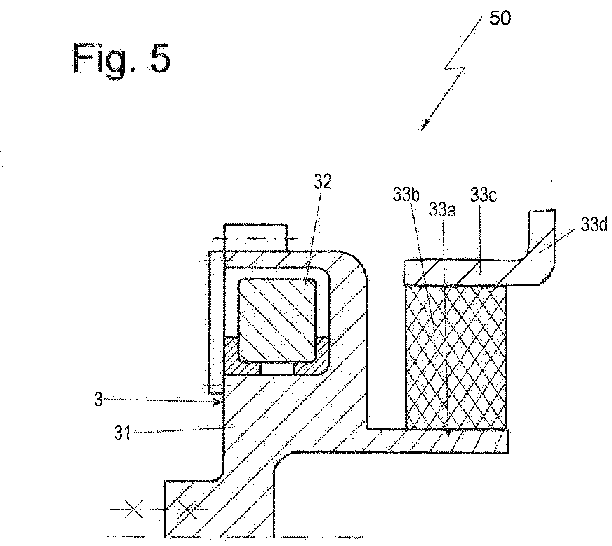

Eine weitgehend analoge Anordnung zu Fig. 3 zeigt die Fig. 5. Der Aufbau entspricht dem der Fig. 5, allerdings geht der äußere Ring 33c - anders als in Fig. 3 - an seinem vom Elastomer-Kupplungsring 33b axial abgewandten Ende in einen sich radial nach außen erstreckenden Abschnitt 33d über. Derart wird ein weitestgehend radialer Kraftfluss durch den Elastomer-Kupplungsring 33b erreicht. Nach Fig. 3 wird dagegen ein eher diagonal verlaufender Kraftfluss durch den Elastomer-Kupplungsring 33b realisiert. Denn nach Fig. 3 geht der äußere Ring 33c - anders als in Fig. 3 - an seinem vom Elastomer-Kupplungsring 33b axial abgewandten Ende in einen sich axial nach innen erstreckenden Abschnitt 33d über.

Der innere Ring 33a oder der äußere Ring 33c können so ausgebildet sein, dass die Verbindung zum Elastomerelement 33b über einen Formschluss erfolgt. Hierdurch wird der Kupplungs-Funktionsabschnitt steckbar und die Montage des Antriebsstrangs wird vereinfacht.

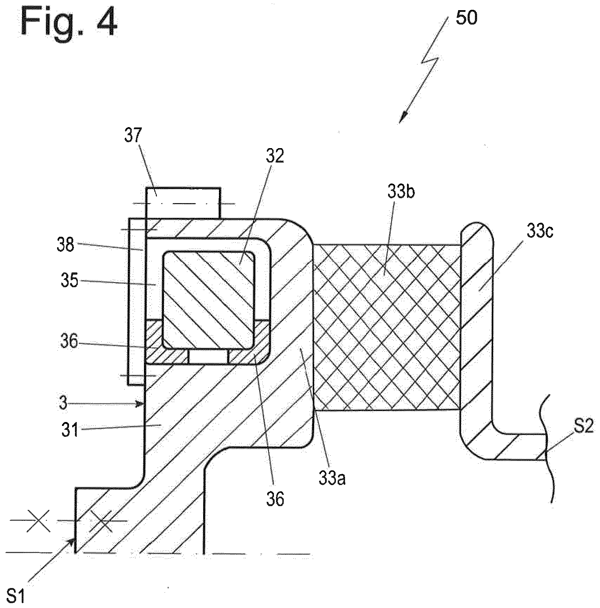

Nach Fig. 4 weist der Kupplungs-Funktionsabschnitt 33 als den ersten Ring einen axial ersten inneren Ring 33a bzw. einen Ringabschnitt auf, an dem axial der Elastomer-Kupplungsring 33b an einem ersten axialen Ende festgelegt ist, wobei der erste Ring 33a mit der Primärmassenträgheit 31 gekoppelt ist und wobei ein axial zweites Ende des Elastomer-Kupplungsringes 33b axial an dem zweiten Ring 33c festgelegt, der ein Teil eines Eingangselementes 6 eines Getriebes 6 oder eines Generators oder dgl. ist.. Auch diese Anordnung baut bei geringem Gewicht sehr kompakt auf und ist konstruktiv einfach realisierbar.

Wie in Fig. 3 bis 5 dargestellt, kann der Kupplungs-Funktionsabschnitt 33 auf einfache Weise einen derartigen Aufbau aufweisen, dass eine eher diagonale, eine eher axiale oder eine eher (bzw. jeweils im Wesentlichen) diagonale Kraftübertragung ermöglicht ist bzw. realisiert wird.

In den Kupplungsabschnitt können weitere Funktionen eingebracht werden wie z.B. Kühlungskanäle für das Elastomer. So kann der Elastomer-Kupplungsring hierzu einen oder mehrere insbesondere Lüftungsfreiräume, insbesondere Spalte, aufweisen (hier nicht dargestellt).

Mit der Beschreibung der Ausführungsbeispiele soll die Erfindung nicht auf diese speziellen Ausgestaltungen eingeschränkt werden. Als Schermittel wird Silikonöl erwähnt; dabei sind auch alle anderen, für diese Zwecke bekannte Schermittel möglich. Die Größen und Abmessungsverhältnisse sollen ebenfalls durch dieses Ausführungsbeispiel nicht beschränkt werden.

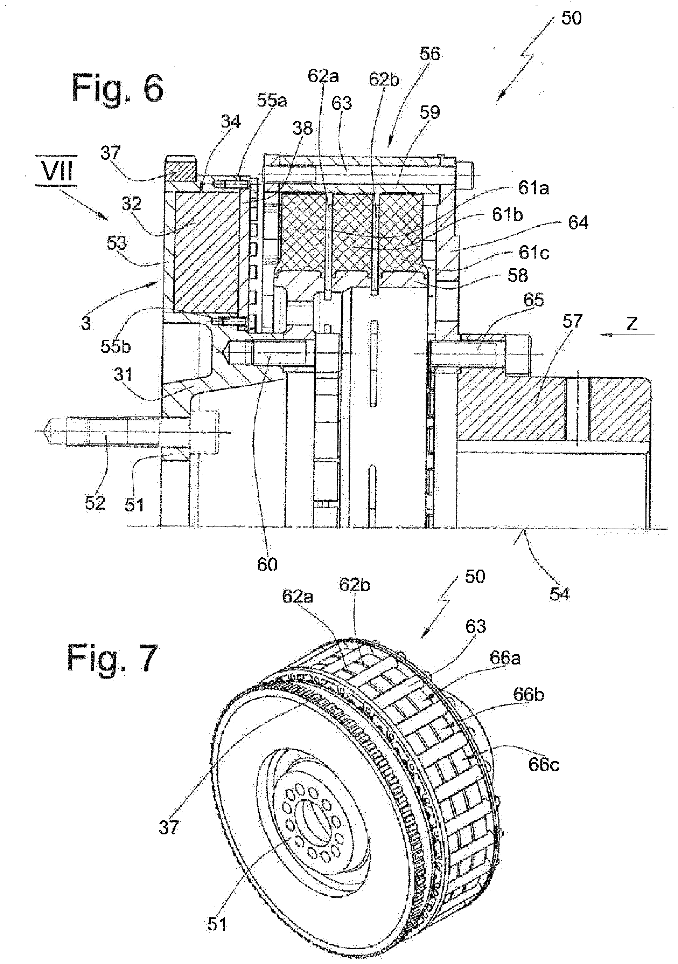

Ausweislich der Figuren 6 und 7 wird ein weiteres Ausführungsbeispiel einer Vorrichtung 50 zum Dämpfen von Drehschwingungen einer Kurbelwelle erläutert:
Die Vorrichtung 50 der Figur 6 umfasst einen Drehschwingungsdämpfer 3, der bei diesem Ausführungsbeispiel eine Primärmasse 31 aufweist, die mit einem radial innenliegenden Flanschabschnitt 51 unter Zuhilfenahme schematisch dargestellter Befestigungsschrauben 52 an dem in den Figuren 6 und 7 nicht dargestellten abtriebsseitigen Ende der Kurbelwelle 2 festlegbar ist. Fest mit der Primärmasse 31 verbunden ist eine Wandung 53, die eine Kammer 34 mit einem im Wesentlichen rechteckförmigen Querschnitt bereitstellt. In der Kammer 34 ist eine Sekundärmasse 32 mit ebenfalls rechteckigem, dem Querschnitt der Kammer 34 angepassten, Querschnitt angeordnet. Die Sekundärmasse 32 ist wie bei den vorherigen Ausführungsbeispielen unter Zuhilfenahme eines in Fig. 6 nicht dargestellten viskosen Fluids in Umfangsrichtung um die Radialachse 54 relativ zu der Primärmasse 31 drehbar. Unter Zuhilfenahme von Befestigungsschrauben 55a, 55b ist ein Deckel 38 dazu ausgebildet, die Kammer 34 zu verschließen.

Die Befestigungsschrauben 55a, 55b sind von der der Kurbelwelle 2 abgewandten Seite des Drehschwingungsdämpfers 3 her zugänglich.

Radial außerhalb der Kammer 34 ist - wiederum mit der Primärmasse 31 fest verbunden - eine Verzahnung 37 angeordnet.

Eine elastische Kupplung 56 ist im Kraftleitungsweg von der in Figur 6 nicht dargestellten Kurbelwelle 2 hin zu dem in Figur 6 lediglich angedeuteten Getriebe 57 oder Generator, hinter dem Drehschwingungsdämpfer 3, angeordnet, bzw. diesem nachgeschaltet.

Die elastische Kupplung 56 umfasst einen radial innenliegenden Flansch 58, der die Kupplungseingangsseite bildet, und einen radial außenliegenden Flansch 59, der die Kupplungsausgangsseite bereitstellt.

Der radial innenliegende Flansch 58 ist unmittelbar über ein Befestigungselement 60 mit der Primärmasse 31 verbunden.

Zwischen dem radial innenliegenden Flansch 58 und dem radial außenliegenden Flansch 59 sind bei dem Ausführungsbeispiel der Figuren 6 und 7 drei Elastomerelemente 61a, 61b, 61c angeordnet.

Zwischen jeweils zwei benachbarten Elastomerelementen ist ein Schlitz 62a, 62b für einen Durchtritt von Kühlluft vorgesehen.

Gleichermaßen ist an dem radial innenliegenden Flansch 58 eine entsprechende Öffnung 63a, 63b vorgesehen, die den Durchtritt von Kühlluft in Radialrichtung von innen nach außen zulässt. Hierdurch kann die beim Betrieb entstehende Wärme bzw. die Umgebungswärme effizient abgeführt werden.

An der Ausgangsseite der Kupplung 56 ist - mit dem radial außenliegenden Flansch 59 unter Zuhilfenahme von Befestigungselementen 63 verschraubt - ein Abschlussflansch 64 vorgesehen. Der Abschlussflansch 64 ist über Befestigungselemente 65 mit dem Getriebe 57 - oder je nach Anwendungsfall mit einem Generator 57 - verschraubt.

Die Zahl der jeweiligen Befestigungselemente 52, 55, 60, 63, 65 ist beliebig.

Von Interesse ist, dass die Befestigungselemente 60 zur Festlegung der elastischen Kupplung 56 an der Primärmasse 31 radial außerhalb der Befestigungselemente 52 angeordnet sind, die der Befestigung der Primärmasse 31 und damit dem gesamten Schwingungsdämpfer 3 an der Kurbelwelle 2 dienen.

Weiter ist von Interesse, dass die Befestigungselemente 65 zur Festlegung des Abschlussflansches 64 an dem Getriebe oder Generator 57 auf dem gleichen oder etwa dem gleichem Radius liegen, wie die Befestigungselemente 60 zur Festlegung der elastischen Kupplung 56 an der Primärmasse 31.

Weiter ist von Bedeutung, dass die Festlegung des Abschlussflansches 64 an dem radial außenliegenden Flansch 59 unter Verwendung von Befestigungselementen 63 erfolgt, die - wie am besten Figur 7 erkennen lässt - zwischen sich Freiräume 66a, 66b, 66c usw. belassen, so dass die Wärme noch besser nach außen abgeführt werden kann.

Ausweislich des Ausführungsbeispiels der Figuren 6 und 7 ist deutlich, dass die Vorrichtung 50 insgesamt als Baueinheit oder Handhabungseinheit fungiert. Die elastische Kupplung 56 kann an dem Schwingungsdämpfer 3 vormontiert sein, und gemeinsam mit diesem eine Handhabungseinheit bilden und als Handhabungseinheit an der Kurbelwelle 2 befestigt werden.

Andererseits macht insbesondere das Ausführungsbeispiel der Figur 6 deutlich, dass auch eine lösbare Befestigung der elastischen Kupplung 56 an dem Schwingungsdämpfer 3 gegeben ist. Die elastische Kupplung 56 kann von der Zugangsrichtung Z her an dem Schwingungsdämpfer 3 befestigt und auch von diesem wieder gelöst werden.

Darüber hinaus ist die Vorrichtung 50 gemäß Figur 6 insgesamt so ausgebildet, dass von der Zugangsrichtung Z her eine Befestigung von Getriebe oder Generator 57 relativ zu dem Abschlussflansch 64 bewerkstelligbar ist, aber auch eine Befestigung des Abschlussflansches 64 an dem radial äußeren Flansch 59 von der Zugangsrichtung Z her möglich ist. Gleichermaßen kann von der Zugangsrichtung Z her eine Befestigung der elastischen Kupplung 56 an der Primärmasse 31, eine Befestigung des Deckels 38 an der Primärmasse 31, und eine Befestigung des Schwingungsdämpfers 3 bzw. der gesamten Vorrichtung 50 an der Kurbelwelle 2 erfolgen.

Schließlich ist deutlich, dass auch bei bereits an dem radial äußeren Flansch 59 befestigter Abschlussflanschplatte 64 eine Befestigung der Vorrichtung 50 insgesamt als Handhabungseinheit, also umfassend Schwingungsdämpfer 3 und elastische Kupplung 56, unter Zuhilfenahme der Befestigungsmittel 52 an der Kurbelwelle 2 erfolgen kann.

### Bezugszeichenliste

- 1: Kurbelwellenanordnung
- 2: Kurbelwelle
- 3: Drehschwingungsdämpfer
- 4: Schwungrad
- 5: Antriebsende der Kurbelwelle
- 31: Primärmassenträgheit / Nabe
- 32: Sekundärmassenträgheit / Schwungring
- 33: Kupplungs-Funktionsabschnitt
- 33a: innerer Ring
- 33b: Elastomer-Kupplungsring
- 33c: äußerer Ring 33d Abschnitt
- 34: Kammer
- 35: Spalt
- 36: Lagerringe
- 37: Verzahnung
- 38: Deckel
- S1,: S2 Drehmomentkoppelstelle
- 50: Vorrichtung
- 51: Flanschabschnitt
- 52: Befestigungsschrauben
- 53: Wandung
- 54: Radialachse
- 55: a, b Befestigungsschrauben
- 56: Elastische Kupplung
- 57: Getriebe oder Generator
- 58: Radial innenliegender Flansch
- 59: Radial außenliegender Flansch
- 60: Befestigungselement
- 61: a, b, c Elastomerelemente
- 62: a, b Schlitze
- 63: Befestigungselement
- 64: Flansch
- 65: Befestigungselemente
- 66: a, b c Freiraum
- Z: Zugangsrichtung

## Patentansprüche

1. Kurbelwellenanordnung (1), die für einen Verbrennungsmotors ausgelegt ist, bestehend aus
a. einer Kurbelwelle (2),
b. einem Viskositäts-Drehschwingungsdämpfer (3) zum Dämpfen von elastischen Resonanz-Drehschwingungen der Kurbelwelle und einem Abtrieb (5),
c. wobei der Drehschwingungsdämpfer (3) aus einer Primärmassenträgheit (31) und einer Sekundärmassenträgheit (32) besteht,
d. wobei die Primärmassenträgheit (31) fest mit der Kurbelwelle (2) verbunden ist und die Sekundärmassenträgheit (32) als seismische Masse mit einer viskosen Flüssigkeit an die Primärmassenträgheit (31) gekoppelt ist,
e. wobei der Drehschwingungsdämpfer (3) an einem Abtriebsende (5) der Kurbelwelle (2) angebracht ist,
f. wobei in den Drehschwingungsdämpfer (3) die Funktionen Kupplungs-Funktionsabschnitt - insbesondere ausgelegt als eine Elastomerkupplung -, und Drehschwingungsdämpfer integriert sind,
g. wobei über den Drehschwingungsdämpfer (3) und den Kupplungs-Funktionsabschnitt (33) ein hauptsächlicher Teil der Leistung des Verbrennungsmotors - mehr als 50% - abnehmbar ist,
h. wobei der Drehschwingungsdämpfer (3) dazu ausgelegt ist, neben der Funktion der Reduzierung der Resonanz-Drehschwingungen der Kurbelwelle (2) auch eine Schwungradfunktion zur Reduzierung der Drehungleichförmigkeit zu übernehmen, so dass in den Drehschwingungsdämpfer (3) die Funktion Schwungrad integriert ist, i. **dadurch gekennzeichnet, dass** der Drehschwingungsdämpfer eine Schwungmassenträgheit bildet, die in eine kleine Primärmassenträgheit (31) und eine relativ dazu größere Sekundärmassenträgheit (32) derart aufgeteilt ist, dass bei niedrigen Drehzahlen, also niedrigen Frequenzen, der Verbund aus Primär- und Sekundärmassenträgheit sich quasi wie ein starrer Körper verhält, wodurch seine gesamte Massenträgheit wirksam ist und die Drehungleichförmigkeit des Motors wie bei einem Schwungrad reduziert wird und so dass sich bei hohen Drehzahlen und hohen Frequenzen, der Verbund aus Primär- und Sekundärmassenträgheit wie ein Dämpfer verhält.

2. Kurbelwellenanordnung gemäß Anspruch 1, **dadurch gekennzeichnet, dass** die ringförmige Primärmassenträgheit (31) an ihrem Außenumfang mit einer vorzugsweise umlaufenden Verzahnung (37) versehen ist, insbesondere, um einen Starterkranz auszubilden.

3. Kurbelwellenanordnung gemäß Anspruch 1 oder 2, **dadurch gekennzeichnet, dass** der Kupplungs-Funktionsabschnitt (33), ausgebildet als Elastomerkupplung, einen axialen und/oder einen radialen Aufbau aufweist.

4. Kurbelwellenanordnung gemäß Anspruch 1, 2 oder 3, **dadurch gekennzeichnet, dass** der Kupplungs-Funktionsabschnitt (33) eine derartigen Aufbau aufweist, dass eine eher radiale, eher axiale oder eher diagonale Kraftübertragung ermöglicht ist.

5. Kurbelwellenanordnung gemäß Anspruch 3 oder 4, **dadurch gekennzeichnet, dass** der Kupplungs-Funktionsabschnitt (33) einen ersten Ring (33a) aufweist, an dem ein Elastomer-Kupplungsring (33b) festgelegt ist, wobei der erste Ring (33a) mit der Primärmassenträgheit (31) gekoppelt ist und dass der Elastomer-Kupplungsring (33b) ferner an einem zweiten Ring (33c) festgelegt ist, der ein Teil eines Eingangselementes (6) eines Getriebes (6) ist.

6. Kurbelwellenanordnung gemäß Anspruch 5, **dadurch gekennzeichnet, dass** der Kupplungs-Funktionsabschnitt (33) als den ersten Ring einen radial inneren Ring (33a) aufweist, auf dessen Außenumfang der Elastomer-Kupplungsring (33b) an seinem Innenumfang festgelegt ist, wobei der innere Ring (33a) mit der Primärmassenträgheit (31) gekoppelt ist und dass der Außenumfang des Elastomer-Kupplungsringes (33b) an einem äußeren Ring (33c) als der zweite Ring festgelegt, der ein Teil eines Eingangselementes (6) des Getriebes (6) ist.

7. Kurbelwellenanordnung gemäß Anspruch 5, **dadurch gekennzeichnet, dass** der Kupplungs-Funktionsabschnitt (33) als den ersten Ring einen axial ersten inneren Ring (33a) aufweist, an dem axial der Elastomer-Kupplungsring (33b) an einem ersten axialen Ende festgelegt ist, wobei der erste Ring (33a) mit der Primärmassenträgheit (31) gekoppelt ist und dass ein axial zweites Ende des Elastomer-Kupplungsringes (33b) axial an dem zweiten Ring (33c) festgelegt, der ein Teil eines Eingangselementes (6) des Getriebes (6) ist.

8. Kurbelwellenanordnung gemäß einem der vorstehenden Ansprüche, **dadurch gekennzeichnet, dass** der Kupplungs-Funktionsabschnitt (33) ganz oder teilweise als axial ansteckbare Einheit aufgebaut ist.

9. Kurbelwellenanordnung gemäß einem der vorstehenden Ansprüche, **dadurch gekennzeichnet, dass** der Kupplungs-Funktionsabschnitt (33) direkt in ein Gehäuse des Drehschwingungsdämpfers (3) integriert ist.

10. Kurbelwellenanordnung gemäß Anspruch 9, **dadurch gekennzeichnet, dass** das Verhältnis zwischen der Sekundärmassenträgheit und der Primärmassenträgheit größer als 1/2 ist, vorzugsweise größer als 1/1 ist oder dass es 2/1 oder größer als 2/1 ist.

11. Kurbelwellenanordnung gemäß einem der vorstehenden Ansprüche, **dadurch gekennzeichnet, dass** das fluide Schermittel ein Silikonöl ist.

12. Kurbelwellenanordnung gemäß einem der vorstehenden Ansprüche, **dadurch gekennzeichnet, dass** der Drehschwingungsdämpfer (3) an dem Abtriebsende (5) der Kurbelwelle (2) befestigt ist und dass der Drehschwingungsdämpfer die ringförmige Primärmassenträgheit (31) aufweist, die fest mit der Kurbelwelle (2) verbunden ist, und die Sekundärmassenträgheit (32), die als Ring ausgebildet ist, der in einer Kammer (34) der Primärmassenträgheit (31) angeordnet ist, wobei ein Spalt (35) zwischen diesen beiden Massen mit viskosem Medium, insbesondere Silikonöl, gefüllt ist.

13. Kurbelwellenanordnung gemäß einem der vorstehenden Ansprüche, **dadurch gekennzeichnet, dass** der Elastomer-Kupplungsring (33b) einen oder mehrere insbesondere Lüftungsfreiräume, insbesondere Spalte, aufweist.

14. Kurbelwellenanordnung gemäß Anspruch 13, **dadurch gekennzeichnet, dass** die Kupplung (56) von einer im wesentlichen ringförmigen Anordnung bereitgestellt ist, welche vorzugsweise radial innerhalb der Primärmassenträgheit (31) positioniert ist.

15. Kurbelwellenanordnung gemäß Anspruch 14, **dadurch gekennzeichnet, dass** die Anordnung (56) axial neben der Primärmassenträgheit (31) und/oder axial neben dem Drehschwingungsdämpfer 3 positioniert ist.

## Claims

1. Crankshaft assembly (1) which is designed for an internal combustion engine, consisting of
a) a crankshaft (2),
b) a viscosity torsional vibration damper (3) for damping elastic resonance torsional vibrations of the crankshaft and an output (5),
c) wherein the torsional vibration damper (3) consists of a primary mass inertia (31) and a secondary mass inertia (32),
d) wherein the primary mass inertia (31) is securely fixed to the crankshaft (2) and the secondary mass inertia (32) is coupled to the primary mass inertia (31) as seismic mass with a viscous fluid,
e) wherein the torsional vibration damper (3) is mounted to an output end (5) of the crankshaft (2),
f) wherein the functions clutch function portion - in particular designed as an elastomer clutch, and torsional vibration damper are integrated in the torsional vibration damper (3),
g) wherein via the torsional vibration damper (3) and the clutch function portion (33) a main part of the performance of the internal combustion engine - more than 50% - is removable,
h) wherein the torsional vibration damper (3) is designed, in addition to the function of reducing the resonance torsional vibrations of the crankshaft (2), also to take on a flywheel function for reducing the rotational non-uniformity, such that the function flywheel is integrated in the torsional vibration damper (3),
i) **characterised in that** the torsional vibration damper forms a flywheel mass inertia which is divided into a small primary mass inertia (31) and a secondary mass inertia (32), greater in relation thereto, such that in the case of low rotational speeds, that is low frequencies, the composite of primary and secondary mass inertia behaves virtually in the manner of a rigid body, whereby its entire mass inertia is effective and the rotational non-uniformity of the motor is reduced as in the case of a flywheel, and such that in the case of high rotational speeds and high frequencies the composite of primary and secondary mass inertia behaves like a damper.

2. Crankshaft assembly according to claim 1, **characterised in that** the annular primary mass inertia (31) is equipped on its outer periphery with a preferably circumferential toothing (37), in particular to form a starter rim.

3. Crankshaft assembly according to claim 1 or 2, **characterised in that** the clutch function portion (33), formed as an elastomer clutch, has an axial and/or a radial construction.

4. Crankshaft assembly according to claim 1, 2 or 3, **characterised in that** the clutch function portion (33) has a construction such that a rather radial, rather axial or rather diagonal transmission of force is facilitated.

5. Crankshaft assembly according to claim 3 or 4, **characterised in that** the clutch function portion (33) has a first ring (33a) to which an elastomer clutch ring (33b) is fixed, wherein the first ring (33a) is coupled to the primary mass inertia (31) and that the elastomer clutch ring (33b) is further fixed to a second ring (33c) which is a part of an input element (6) of a transmission (6).

6. Crankshaft assembly according to claim 5, **characterised in that** the clutch function portion (33) has as the first ring a radially inner ring (33a), on the outer periphery of which the elastomer clutch ring (33b) is fixed at its inner periphery, wherein the inner ring (33a) is coupled to the primary mass inertia (31) and that the outer periphery of the elastomer clutch ring (33b) is fixed to an outer ring (33c) as the second ring, which is a part of an input element (6) of the transmission (6).

7. Crankshaft assembly according to claim 5, **characterised in that** the clutch function portion (33) has as the first ring an axially first inner ring (33a) to which the elastomer clutch ring (33b) is fixed axially at a first axial end, wherein the first ring (33a) is coupled to the primary mass inertia (31) and that an axially second end of the elastomer clutch ring (33b) is fixed axially to the second ring (33c) which is a part of an input element (6) of the transmission (6).

8. Crankshaft assembly according to any of the preceding claims, **characterised in that** the clutch function portion (33) is constructed completely or partially as a unit which can be plugged on axially.

9. Crankshaft assembly according to any of the preceding claims, **characterised in that** the clutch function portion (33) is integrated directly in a housing of the torsional vibration damper (3).

10. Crankshaft assembly according to claim 9, **characterised in that** the ratio between the secondary mass inertia and the primary mass inertia is greater than 1/2, preferably greater than 1/1 or that it is 2/1 or greater than 2/1.

11. Crankshaft assembly according to any of the preceding claims, **characterised in that** the fluid shear agent is a silicone oil.

12. Crankshaft assembly according to any of the preceding claims, **characterised in that** the torsional vibration damper (3) is fastened to the output end (5) of the crankshaft (2) and that the torsional vibration damper has the annular primary mass inertia (31) which is securely fixed to the crankshaft (2) and the secondary mass inertia (32) which is formed as a ring which is arranged in a chamber (34) of the primary mass inertia (31), wherein a gap (35) between these two masses is filled with viscous medium, in particular silicone oil.

13. Crankshaft assembly according to any of the preceding claims, **characterised in that** the elastomer clutch ring (33b) has one or several in particular ventilation spaces, in particular gaps.

14. Crankshaft assembly according to claim 13, **characterised in that** the clutch (56) provided by a substantially annular assembly which is preferably positioned radially within the primary mass inertia (31).

15. Crankshaft assembly according to claim 14, **characterised in that** the assembly (56) is positioned axially next to the primary mass inertia (31) and/or axially next to the torsional vibration damper 3.

## Revendications

1. Système bielle-manivelle (1), qui est conçu pour un moteur à combustion, composé de
a) une bielle-manivelle (2),
b) un amortisseur de vibrations tortionnelles à viscosité (3) pour amortir les vibrations tortionnelles par résonance élastique de la bielle-manivelle et une sortie (5),
c) dans lequel l'amortisseur de vibrations tortionnelles (3) est constitué d'une inertie de masse primaire (31) et d'une inertie de masse secondaire (32),
d) dans lequel l'inertie de masse primaire (31) est connectée de manière fixe à la bielle-manivelle (2) et l'inertie de masse secondaire (32) est couplée à l'inertie de masse primaire (31) en tant que masse sismique avec un liquide visqueux,
e) dans lequel l'amortisseur de vibrations tortionnelles (3) est placé à une extrémité de sortie (5) de la bielle-manivelle (2),
f) dans lequel les fonctions section fonctionnelle-accouplement, en particulier conçue en tant qu'accouplement élastomère, et amortisseur de vibrations tortionnelles sont intégrées dans l'amortisseur de vibrations tortionnelles (3),
g) dans lequel une principale partie des performances du moteur à combustion, soit plus de 50 %, peut être éliminée par l'intermédiaire de l'amortisseur de vibrations tortionnelles (3) et la section fonctionnelle d'accouplement (33),
h) dans lequel l'amortisseur de vibrations tortionnelles (3) est conçu, outre la fonction de réduction des vibrations tortionnelles de résonance de la bielle-manivelle (2), pour assumer également une fonction de volant d'inertie pour réduire l'irrégularité de rotation, de sorte que la fonction de volant d'inertie soit intégrée dans l'amortisseur de vibrations de rotation (3),
i) **caractérisé en ce que** l'amortisseur de vibrations tortionnelles forme une inertie de masse volant qui est divisée en une petite inertie de masse primaire (31) et une inertie de masse secondaire relativement plus grande (32), de sorte qu'en cas de basses vitesses de rotation, c'est-à-dire de basses fréquences, la combinaison des inerties de masse primaire et secondaire se comporte quasiment comme un corps rigide, de sorte que toute son inertie de masse est efficace et l'irrégularité de rotation du moteur est réduite comme dans le cas d'un volant d'inertie et de sorte qu'en cas de vitesses de rotation élevées et de fréquences élevées, la combinaison des inerties de masse primaire et secondaire se comporte en tant qu'amortisseur.

2. Système bielle-manivelle selon la revendication 1, **caractérisé en ce que** l'inertie de masse primaire annulaire (31) est dotée sur sa périphérie extérieure d'une denture (37) de préférence circonférentielle, en particulier pour former une couronne de démarreur.

3. Système bielle-manivelle selon la revendication 1 ou 2, **caractérisé en ce que** la section fonctionnelle d'accouplement (33), conçue en tant qu'accouplement élastomère, présente une structure axiale et/ou radiale.

4. Système bielle-manivelle selon la revendication 1, 2 ou 3, **caractérisé en ce que** la section fonctionnelle d'accouplement (33) présente une structure telle qu'une transmission de force plutôt radiale, plutôt axiale ou plutôt diagonale est possible.

5. Système bielle-manivelle selon la revendication 3 ou 4, **caractérisé en ce que** la section fonctionnelle d'accouplement (33) présente une première bague (33a) à laquelle une bague d'accouplement élastomère (33b) est fixée, dans lequel la première bague (33a) est couplée à l'inertie de masse primaire (31) et **en ce que** la bague d'accouplement élastomère (33b) est en outre fixée à une seconde bague (33c) qui fait partie d'un élément d'entrée (6) d'une transmission (6).

6. Système bielle-manivelle selon la revendication 5, **caractérisé en ce que** la section fonctionnelle d'accouplement (33) présente une bague radialement intérieure (33a) en tant que première bague, sur la périphérie extérieure de laquelle la bague d'accouplement élastomère (33b) est fixée sur sa périphérie intérieure, dans lequel la bague intérieure (33a) est couplée à l'inertie de masse primaire (31) et **en ce que** la périphérie extérieure de la bague d'accouplement élastomère (33b) est fixée à une bague extérieure (33c) en tant que seconde bague qui fait partie d'un élément d'entrée (6) de la transmission (6).

7. Système bielle-manivelle selon la revendication 5, **caractérisé en ce que** la section fonctionnelle d'accouplement (33) présente, en tant que première bague, une première bague intérieure axiale (33a), sur laquelle la bague d'accouplement élastomère (33b) est fixée axialement à une première extrémité axiale, dans lequel la première bague (33a) est couplée à l'inertie de masse primaire (31) et **en ce qu'**une seconde extrémité axiale de la bague d'accouplement élastomère (33b) est fixée axialement à la seconde bague (33c) qui fait partie d'un élément d'entrée (6) de la transmission (6).

8. Système bielle-manivelle selon l'une quelconque des revendications précédentes, **caractérisé en ce que** la section fonctionnelle d'accouplement (33) est réalisée entièrement ou partiellement d'un seul bloc enfichable axialement.

9. Système bielle-manivelle selon l'une quelconque des revendications précédentes, **caractérisé en ce que** la section fonctionnelle d'accouplement (33) est intégrée directement dans un boîtier de l'amortisseur de vibrations tortionnelles (3).

10. Système bielle-manivelle selon la revendication 9, **caractérisé en ce que** le rapport entre l'inertie de masse secondaire et l'inertie de masse primaire est supérieur à 1/2, de préférence supérieur à 1/1 ou **en ce qu'**il est de 2/1 ou supérieur à 2/1.

11. Système bielle-manivelle selon l'une quelconque des revendications précédentes, **caractérisé en ce que** l'agent de cisaillement fluide est une huile de silicone.

12. Système bielle-manivelle selon l'une quelconque des revendications précédentes, **caractérisé en ce que** l'amortisseur de vibrations tortionnelles (3) est fixé à l'extrémité de sortie (5) de la bielle-manivelle (2) et **en ce que** l'amortisseur de vibrations tortionnelles présente l'inertie de masse primaire annulaire (31) qui est connectée de manière fixe à la bielle-manivelle (2), et l'inertie de masse secondaire (32), qui est conçue en tant que bague, qui est disposée dans une chambre (34) de l'inertie de masse primaire (31), dans lequel une fente (35) entre ces deux masses est remplie d'un milieu visqueux, en particulier d'huile de silicone.

13. Système bielle-manivelle selon l'une quelconque des revendications précédentes, **caractérisé en ce que** la bague d'accouplement élastomère (33b) présente une ou plusieurs espaces de ventilation, en particulier des fentes.

14. Système bielle-manivelle selon la revendication 13, **caractérisé en ce que** l'accouplement (56) est constitué par un ensemble sensiblement annulaire qui est de préférence positionné radialement à l'intérieur de l'inertie de masse primaire (31).

15. Système bielle-manivelle selon la revendication 14, **caractérisé en ce que** l'ensemble (56) est positionné axialement à côté de l'inertie de masse primaire (31) et/ou axialement à côté de l'amortisseur de vibrations tortionnelles 3.
